# EUROPÄISCHE PATENTSCHRIFT

(11) **EP 1 090 447 B1**
(45) Veröffentlichungstag und Bekanntmachung des Hinweises auf die Patenterteilung: **15.01.2003**
(21) Anmeldenummer: 00920389.4
(22) Anmeldetag: 09.03.2000
(51) Int. Cl.: H02G 3/12, H02B 1/40

(54) **BEFESTIGUNGSVORRICHTUNG FÜR IN HOHLWANDDURCHBRÜCHE EINBAUBARE INSTALLATIONSKÄSTEN, INSBESONDERE FÜR ELECTROKLEINVERTEILER**
FIXING DEVICE FOR DISTRIBUTION BOXES FITTED IN OPENINGS IN HOLLOW WALLS, NOTABLY FOR AN ELECTRIC DISTRIBUTION BOARD
DISPOSITIF DE FIXATION POUR BOITES DE DISTRIBUTION POUVANT ETRE INTEGREES DANS DES PASSAGES MENAGES DANS DES MURS CREUX, EN PARTICULIER POUR UN REPARTITEUR DE LIGNES ELECTRIQUES

(30) Priorität: 23.04.1999 DE 29907196 U
(43) Veröffentlichungstag der Anmeldung: 11.04.2001
(73) Patentinhaber: STRIEBEL & JOHN GmbH & Co. KG, D-77880 Sasbach (DE)
(72) Erfinder: MIKOWSKI, Lothar, F-77654 Offenburg (DE)
(74) Vertreter: Thoma, Friedrich, Dipl.-Ing.(FH)
(86) Internationale Anmeldenummer: DE0000787
(87) Internationale Veröffentlichungsnummer: WO00065702

(56) Entgegenhaltungen:
- WO-A-96/26564
- FR-A- 2 744 849

## Beschreibung

Die Erfindung betrifft eine Befestigungsvorrichtung für in Hohlwanddurchbrüche einbaubare Installationskästen, insbesondere für Elektrokleinverteiler, mit den Merkmalen nach dem Oberbegriff des Patentanspruchs 1.

Bei derartigen Installationskästen, insbesondere bei sogenannten Elektrokleinverteilern, die in Durchbrüche von Hohlwänden einzubauen sind, ist es erforderlich, daß derartige Verteiler im Hohlwanddurchbruch nicht nur zuverlässig kraftschlüssig fixierbar, sondern auch rationell und wirtschaftlich montierbar sind. Dabei soll sichergestellt sein, daß die Vorrichtung nicht nur zweckmäßig an einem Elektrokleinverteiler gelagert und funktionskonform geführt ist, sondern auch, daß die an der Vorrichtung vorgesehene manuelle Bedienungseinrichtung der Vorrichtung einfach, übersichtlich und zweckmäßig handhabbar ist.

Aus der DE 25 26 890 C2 ist eine elektrische Hohlwanddose, wie Schalterdose, Abzweigdose oder dergl. bekannt, die von vorn in den Durchbruch einer Wand eingesetzt wird und einerseits einen Abstützflansch und andererseits seitlich angeordnete, durch Schrauben verstellbare, sowie ein- und ausschwenkbare Laschen aufweist, die in Ihrer eingeschwenkten Lage in einem Aufnahmeraum der Hohlwanddose liegen und in ihrer ausgeschwenkten Lage mit Begrenzungswandungen von zum Doseninneren geschlossenen Längsführungen zusammenwirken, die an der Mantelfläche der Hohlwanddose in Dosenlängsrichtung verlaufend angeordnet sind.

Diese Hohlwanddose besitzt zwar den Vorteil, daß der Wanddurchbruch relativ einfach herstellbar ist, zumal die laschenförmigen Halteglieder innerhalb des Profils der Hohlwanddose liegen. Andererseits ist jedoch bei dieser bekannten Hohlwanddose von Nachteil, daß die Laschen beim Doseneinbau nicht nur relativ unzweckmäßig ausschwenkbar, sondern bei einer Dosendemontage nur relativ umständlich in die an der Dose vorgesehenen Aufnahmeräume zurück- bzw. einschwenkbar sind.

Aus der DE 42 41 390 A1 ist eine elektrische Hohlwanddose bekannt, bei der ebenfalls die laschenförmigen Halteglieder durch Schrauben verstellbar, in Längsführungen der Hohlwanddose geführt und in der Endstellung in einem Aufnahmeraum der Hohlwanddose einschwenkbar sind. Durch die Betäti-gung der jeweils vorgesehenen Schraube wird das einzelne Halteglied zunächst aus dem Aufnahmeraum geschwenkt bzw. bis an einen Dosenanschlag verdreht und dann in Dosenlängsrichtung verlaufend, bis auf die hintere Begrenzungsfläche der Hohlwand kraftschlüssig mittels der Schraube angestellt.

Auch diese Befestigungsvorrichtung der Hohlwanddose ist mit dem erheblichen Nachteil behaftet, daß sich die laschenförmigen Halteglieder beim Befestigungsvorgang nur relativ unkontrollierbar aus den vorgesehenen Aufnahmeräumen an der Dose ausschwenken lassen, insbesondere wenn die vorgesehene Friktion zwischen der Befestigungsschraube und dem Gewinde einer Befestigungslasche zu leichtgängig bzw. abgenützt ist.

Außerdem ist aus der WO 96/26564 eine Hohlwanddose mit einer hohlwandkrallenartigen Befestigungsvorrichtung bekannt, bei der die Hohlwandkralle mit dem Führungs- und Lagenfixierelement mit einem Formausschnitt in der Seitenwand des Kleinverteilers verschwenkbar in Eingriff steht, wobei die Hohlwandkralle durch die Beaufschlagung der Verstellschraube bewirkbar, aus dem Formausschnitt heraus in einer zur Achse der Verstellschraube parallel verlaufenden nutförmigen Verteilerkastenführung verschiebbar gelagert und gegenüber der Rückseite einer Hohlwand kraftschlüssig anstellbar ist.

Diese bekannte Befestigungsvorrichtung für eine Hohlwanddose ist mit dem Nachteil behaftet, daß dort die Hohlwandkrallen keine stützenden, und lagenfixierenden Elemente aufweisen.

Der Erfindung liegt die Aufgabe zugrunde, eine Befestigungsvorrichtung für in Hohlwanddurchbrüchen einbaubare Installationskästen, insbesondere für Elektrokleinverteiler, zu schaffen, die die Nachteile der bekannten Befestigungsvorrichtungen für derartige Hohlwanddosen beseitigt und die nicht nur zuverlässig reproduzierbar wirksam, rationell und wirtschaftlich aufgebaut und einsetzbar, sondern die auch handlich zweckmäßig bedienbar und installierbar ist.

Diese Aufgabe wird mit den Merkmalen im kennzeichnenden Teil des Patentianspruch 1 gelöst und in den Unteransprüchen sind weitere vorteilhafte Einzelheiten beansprucht.

Vorteilhaft bei der neuen Befestigungsvorrichtung für in Hohlwanddurchbrüche einbaubare Installationskästen, insbesondere für Elektrokleinverteiler, ist die zweckmässige Ausbildung der Hohlwandkralle, die nicht nur einstückig mit stützenden, stabilen Führungs- und Fixierelementen, sondern auch mit einem präzisen mittelbaren Drehlager ausgestattet ist, mit dem die Befestigungsschraube in Eingriff steht.

Ein bevorzugtes Ausführungs-, Montage- und Anwendungsbeispiel der neuen Befestigungsvorrichtung ist in den Zeichnungen dargestellt und wird im folgenden näher erläutert. Es zeigen
- Fig. 1: eine schaubildliche Ansicht eines Elektrokleinverteilers mit seitlichen Befestigungsvorrichtungen, vor dem Einbau in einen Hohlwanddurchbruch,
- Fig. 2: eine schaubildliche Ansicht des Elektrokleinverteilers nach Fig. 1, im eingebauten Zustand in einer Hohlwand,
- Fig. 3: eine schaubildliche Ansicht der Einzelteile der Befestigungsvorrichtung und der entsprechenden Erfordernisse am Elektrokleinverteiler nach Fig. 1 und 2,
- Fig. 4: eine Draufsicht auf eine funktionskonforme Anordnung der Befestigungsvorrichtung an einem Elektrokleinverteiler in der Einbaumontageposition eines Elektrokleinverteilers nach Fig. 1,
- Fig. 5: eine Seitenschnittansicht durch die funktionskonforme Anordnung nach Fig. 4,
- Fig. 6: eine schaubildliche Seitenteilschnittansicht eines in eine Hohlwand eingebauten, Elektrokleinverteilers nach Fig. 1 mit, in Befestigungsrichtung leicht angezogener, Befestigungskralle,
- Fig. 7: eine schaubildliche Seitenteilschnittansicht eines in eine Hohlwand eingebauten Elektrokleinverteilers nach Fig. 1 mit, zur Seitenwand senkrecht stehender, Befestigungskralle und
- Fig. 8: eine schaubildliche Seitenteilschnittansicht eines, in einem Hohlwanddurchbruch eingebauten, Elektrokleinverteiler nach Fig. 1 mit räumlich zur Rückseite einer Hohlwand kraftschlüssig wirksam angestellter Befestigungskralle.

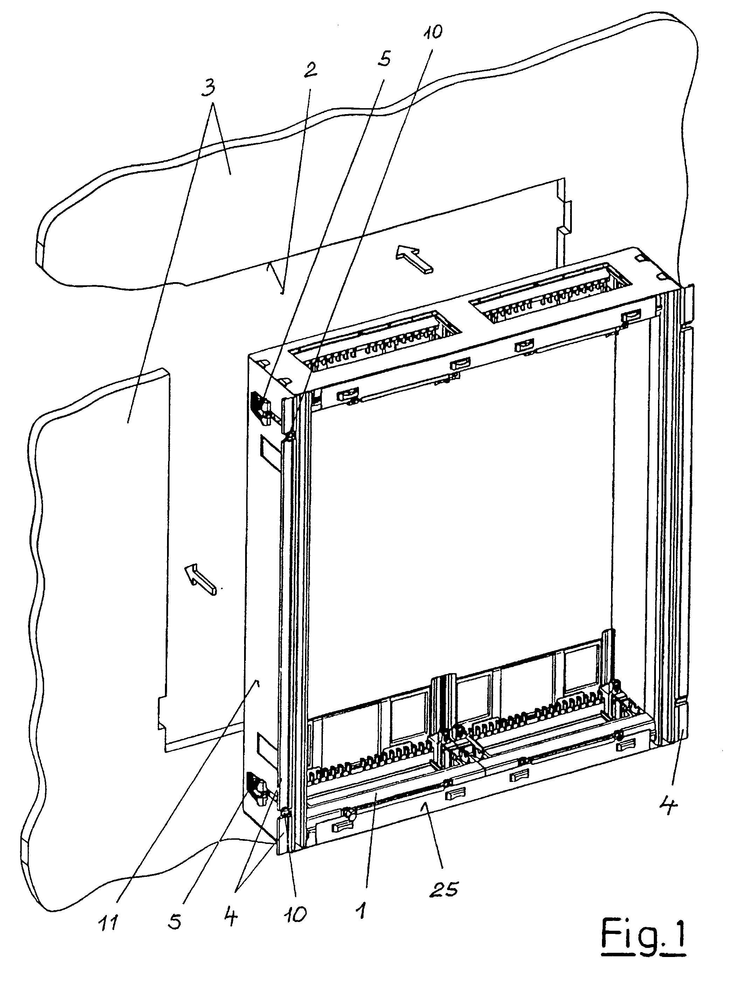

Die Fig. 1 zeigt im einzelnen einen Elektrokleinverteiler 1, der für den Einbau in einen Hohlwanddurchbruch 2 einer Hohlwand 3 vorbereitet ist. 4 bezeichnet eine, am Elektrokleinverteiler 1 vorderseitig einstückig vorgesehene, einseitige, nach außen gerichtete. Anschlagleiste, die den Elektrokleinverteiler 1 räumlich gegenüber der Hohlwand 3 begrenzt.

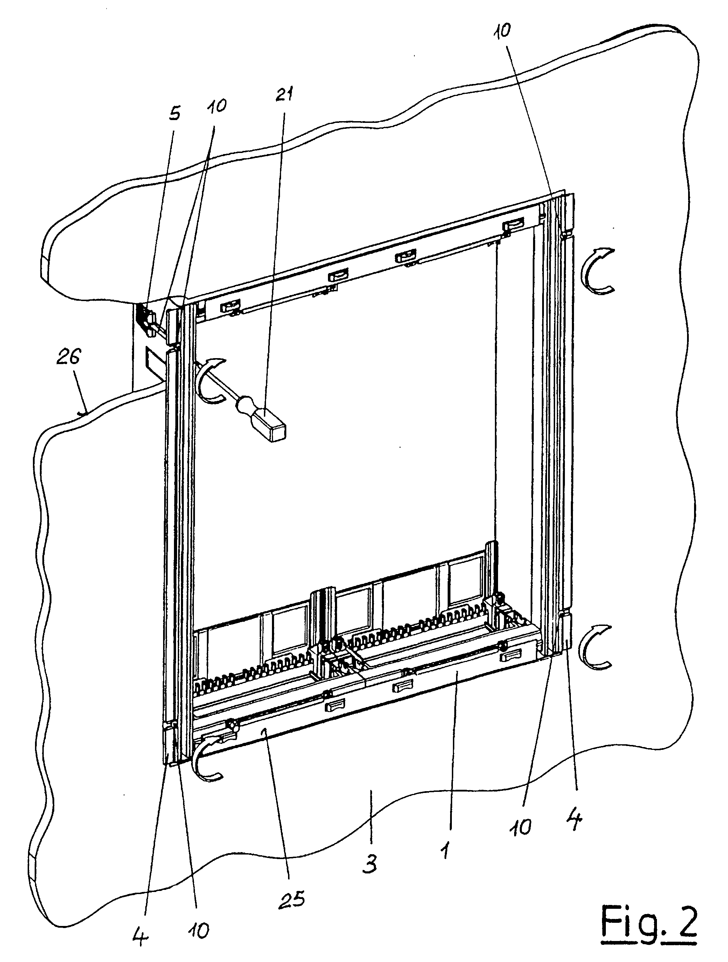

5 kennzeichnet im Bereich der beiden einander benachbarten Seitenwände 11 sogenannte Hohlwandkrallen der neuen Befestigungsvorrichtung, die senkrecht zu den Seitenwänden 11 verschwenkbar auf einem Lagerbolzen 6 gelagert sind und die, wie die Fig. 2 näher zeigt, im eingebauten Zustand des Elektrokleinverteilers 1 in einer Hohlwand 3, jeweils mittels einer, von der Verteilervorderseite 25 bedienbaren Schraube 10, manuell, mittels eines Schraubendrehers 21, gegenüber der Rückseite 26 der Hohlwand 3 kraftschlüssig feststellbar ist.

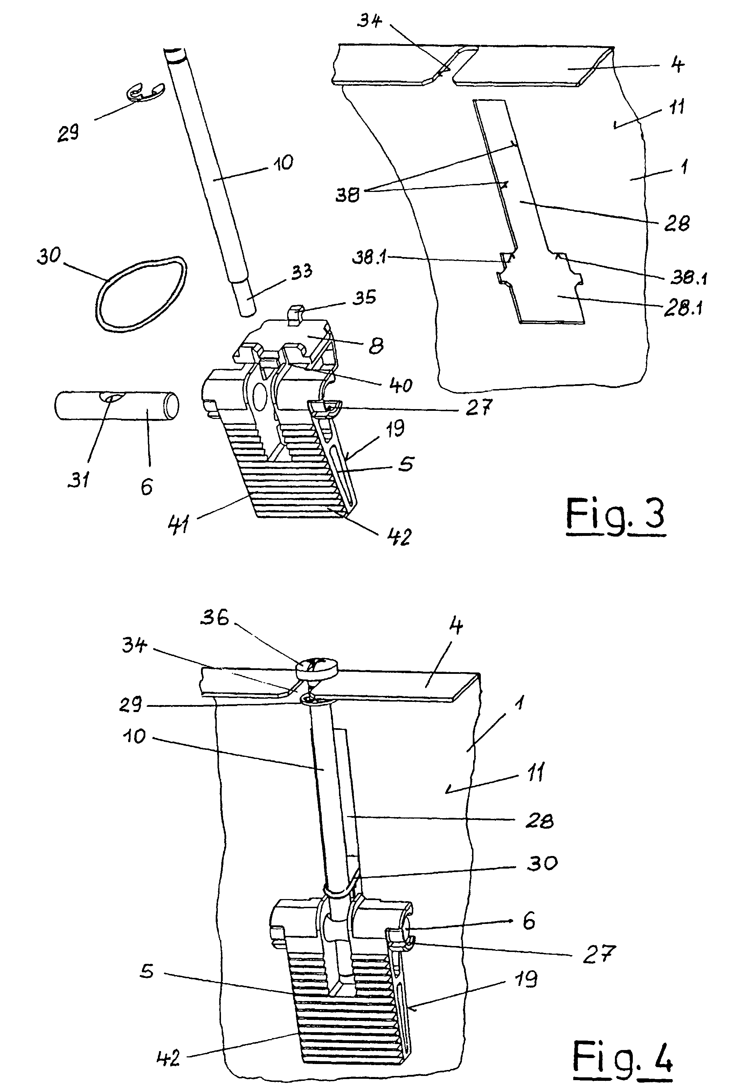

Wie aus der Fig. 3 ersichtlich ist, besteht eine neue Befestigungsvorrichtung funktionsfähig zweckmäßigerweise aus sechs Einzelteilen. Im einzelnen aus einer Verteilerkastenführung 28, einer Hohlwandkralle 5, einem Lagerbolzen 6, einer Schraube 10, einer Sicherungsscheibe 29 und einer gummielastischen Schlaufe 30.

Die Verteilerkastenführung ist als Formausschnitt 28, 28.1 in den Seitenwänden 11 des Elektrokleinverteilers 1, entsprechend der jeweiligen Anzahl der erforderlichen Befestigungsvorrichtungen ausgebildet und dient der Fixierung und Längsführung der Hohlwandkralle 5, die in einem Winkel von ca. 90° einseitig und einstückig mit einem Führungs- und Lagenfixierelement 8 versehen ist, das mit der Verteilerkastenführung 28 funktionskonform in Eingriff steht, wie aus den Fig. 4 bis 8 ersichtlich wird.

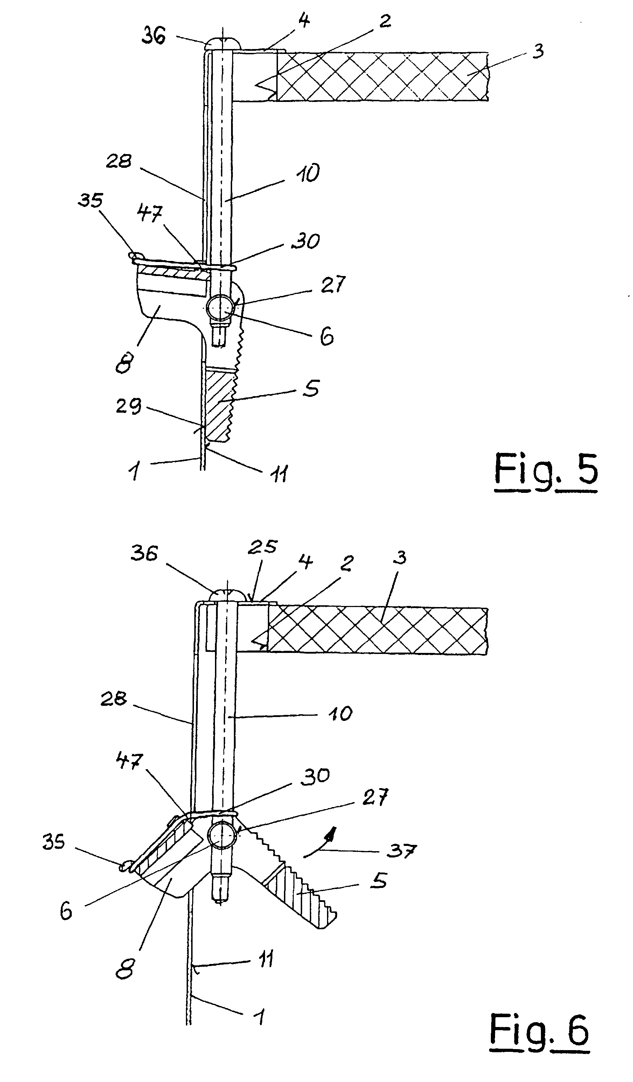

Wie die Fig. 4 bis 8 zeigen, steht der Lagerbolzen 6 in formschlüssigem, drehbarem Eingriff mit einer Lagerführung 27 der Befestigungskralle 5. Der Lagerbolzen 6 ist senkrecht zur Lagerbolzenachse mit einem Gewindeloch 31 versehen, für den Eingriff der Schraube 10, die zweckmäßigerweise dem Schraubenkopf 36 gegenüberliegend, mit einem einseitigen gewindefreien Zylinderbolzen 33 versehen ist, zum einfachen Finden des Gewindelochs 31 im Lagerbolzen 6 während der Vormontage der Befestigungsvorrichtung. 29 bezeichnet eine Sicherungsscheibe auf der Schraube 10, welche verhindert, daß die Schraube 10 im Eingriff mit der Anschlagleiste 4 des Elektrokleinverteilers 1, im Ausgangsmontagezustand der Befestigungsvorrichtung unbeabsichtigt aus dem Lagerbolzen 6 drehbar ist. 35 bezeichnet einen Haken, der einseitig und stoffschlüssig am Führungs- und Lagenfixierelement 8 der Hohlwandkralle 5 angeordnet ist. Am Haken 35 wird die gummielastische Schlaufe 30 eingehängt, wie die Fig. 5 bis 8 zeigen, die die Aufgabe besitzt, durch die Abstützung an der Schraube 10, die Hohlwandkralle 5 einerseits zuverlässig in einer Montageausgangslage parallel zur Seitenwand 11 zu halten, derart, daß die Rückseite 19 der Hohlwandkralle 5 formschlüssig an der Seitenwand 11 anliegt, wie die Fig. 4 dies zeigt, und andererseits, beim Lösen der Befestigungsschraube 10 ein selbsttätigendes Zurückschwenken der Hohlwandkralle 5 in ihre Ausgangslage ermöglicht.

Zur Erzielung der Montageausgangslage der neuen Befestigungsvorrichtung, wie sie aus der Fig. 4 ersichtlich ist, wird zunächst der Lagerbolzen 6 vollständig in die Lagerführung 27 der Befestigungskralle 5 eingeführt. Nun wird die Schraube 10 unter Einbeziehung der Schlaufe 30 mit dem Gewindeloch 31 des Lagerbolzens 6 in Eingriff gebracht und die Sicherungsscheibe 29 auf die Schraube 10 aufgesteckt.

Nun wird die gummielastische Schlaufe 30 in den Haken 35 am Führungsund Lagenfixierelement eingehängt. Danach wird die Hohlwandkralle 5 mit dem Führungs- und Lagenfixierelement 8 in den Formausschnitt 28.1 der Verteilerkastenführung 28 gesteckt, bis die Rückseite 19 der Hohlwandkralle 5 mit Hilfe der gummielastischen Schlaufe 30 federelastisch an der Seitenwand 11 anliegt und die Sicherungsscheibe 29 die Schraube 10 bezüglich ihrer Lagerung in insbesondere einem Langloch 34 in der Anschlagsleiste 4 des Elektrokleinverteilers 1 gesichert ist.

Zweckmäßigerweise sind an einem Elektrokleinverteiler 1, wie in den Fig. 1 und 2 schematisch angedeutet, im Bereich der einander benachbarten Seitenwände 11 jeweils zwei, in einem bestimmten Abstand zueinander angeordnete neue Befestigungsvorrichtungen in Form der Hohlwandkralle 5 vorgesehen.

Die Fig. 5 zeigt den, in einen Hohlwanddurchbruch 2 einer Hohlwand 3 eingesetzten, Elektrokleinverteiler 1, bei dem sich die Befestigungskralle 5 noch in der sogenannten Montageausgangslage befindet. Die Fig. 5 zeigt, daß es zweckmäßig ist, den Hohlwanddurchbruch 2, insbesondere den Befestigungskrallen 5 benachbart, ausreichend weit zu bemessen, daß ein derart ausgerüsteter Elektrokleinverteiler 1 rationell und zweckmäßig in einen Hohlwanddurchbruch 2 einsetzbar ist.

Nach dem Einsetzen und Ausrichten des Elektrokleinverteilers 1 in einem Hohlwanddurchbruch 2 werden auf die, auf der Verteilervorderseite 25 vorgesehenen, Schraubenköpfe 36 mittels eines Schraubendrehers 21 beaufschlagt und die Schraube 10 angezogen. Damit wird die Befestigungskralle 5 aus ihrer parallelen Lage zur Seitenwand 11 in Pfeilrichtung 37 hochgeschwenkt, wie dies aus der Fig. 6 ersichtlich wird.

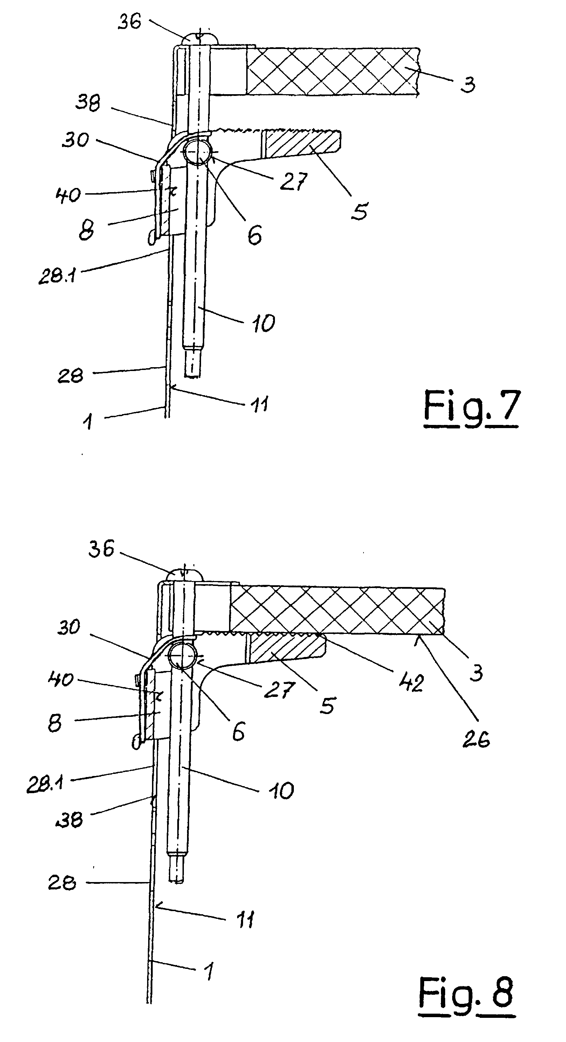

Das Hochschwenken bzw. Aufstellen der Befestigungskralle 5 in eine Lage, gemäß den Fig. 6 und 7 wird dadurch bewirkt, daß sich die Rückkante 47 des Führungs- und Lagenfixierelementes 8 an den einander benachbarten Kanten 38.1 des Formausschnitts 28.1 nach den Fig. 3 und 6 zunächst abgestützt. Danach greifen die beiden einander gegenüberliegenden Führungskanten 38 der Verteilerkastenführung 28 nach Fig. 3 bis 8 in die Führungsnuten 40 ein, die am Führungs- und Lagenfixierelement 8 vorgesehen sind. Durch diesen Eingriff ist die Befestigungskralle 5, unter der Betätigung der Schraube 10 senkrecht und hinreichend stabil zur Seitenwand 11 verlaufend, in der Höhe bzw. dem Abstand zur Rückseite 26 der Hohlwand 3 stufenlos einstellbar und letztlich gegenüber der Rückseite 26 der Hohlwand 3 kraftschlüssig feststellbar, wie dies aus den Fig. 3 bis 8 ersichtlich wird.

Zur Erzielung einer optimalen Form- und unverrückbaren Kraftschlüssigkeit zwischen einer Befestigungskralle 5 und der Rückseite 26 der Hohlwand 3, ist es zweckmäßigerweise vorgesehen, daß die der Hohlwand 3 benachbarten, Vorderseite 41 der Hohlwandkralle 5 mit einer, insbesondere aus zueinander parallel verlaufenden Querriefen bestehenden, Oberflächenbeschaffenheit 42 ausgebildet ist.

Es liegt im Rahmen der Erfindung, daß anstelle der erwähnten gummielastischen Schlaufe 30 zur Lagenfixierung der Hohlwandkralle 5 in der Montageausgangslage gegenüber der Seitenwand 11 auch sogenannte Rastelemente vorgesehen sein können, die zweckmäßigerweise am Führungs- und Lagenfixierelement 8 einseitig und stoffschlüssig angeordnet sind und die funktionskonform mit der Schraube 10 lagensichernd in Eingriff kommen.

Außerdem liegt es im Rahmen der Erfindung, daß die neue Befestigungsvorrichtung nicht nur für sogenannte Elektrokleinverteiler, sondern auch für Elektro- und/oder Telekommunikationsverteilerdosen bzw. -installationskästen, sowie für Elektroeinbaugeräte oder für Sanitär- bzw. Heizungsverteilerkästen und/oder -installationskästen, zweckmäßig, rationell und wirtschaftlich vorteilhaft einsetzbar sind. Dabei ist es vorgesehen, daß die Hohlwandkrallen 5 anstelle aus einem Kunstoffmaterial, erforderlichenfalls auch aus Metall, insbesondere einem Leichtmetallguß, herstellbar sind.

Desweiteren liegt es im Rahmen der Erfindung, daß zum Schutz gegen ein betriebsbedingtes Durchscheuern der gummielastischen Schlaufe 30, zwischen der Oberfläche der Schraube 10 und der dort eingehängten Schlaufe eine schützende Hülse vorgesehen ist.

## Patentansprüche

1. Befestigungsvorrichtung für in Hohlwanddurchbrüche (2) einbaubare Installationskästen, insbesondere Elektrokleinverteiler (1), mit im Bereich der Seitenwände (11) funktionskonform angeordneten Hohlwandkrallen (5), die mit einem rückseitig in einem Winkel von 90° angeordneten Führungs- und Lagenfixierelement (8) versehen sind, daß die Hohlwandkrallen (5) mit dem Führungs- und Lagenfixierelement (8) mit einem Formausschnitt (28.1) in der Seitenwand (11) des Elektrokleinverteilers (1) verschwenkbar in Eingriff steht, daß die Hohlwandkralle durch die Beaufscblagung einer von der Verteilerkastenvorderseite (25) bedienbaren Schraube (10) axial verstellbar, aus dem Formausschnitt (28.1) heraus in einer zur Achse der Schraube (10) parallel verlaufenden nutartigen Verteilerkastenführung (28) schraubenaxial verschiebbar gelagert und gegenüber der Rückseite (26) einer Hohlwand (3) kraftschlüssig anstellbar ist, **dadurch gekennzeichnet, daß** das Führungs- und Lagenfixierelementes (8) mit zwei zueinander parallel verlaufenden, zur Vorderseite (41) der Hohlwandkralle (5) senkrecht verlaufenden Führungsnuten (40) versehen ist.

2. Vorrichtung nach Anspruch 1, **dadurch gekennzeichnet, daß** die Montageausgangslage der Hohlwandkralle (5) mittels einer gummielastischen Schlaufe (30) sicherbar ist.

3. Vorrichtung nach Anspruch 1 und 2, **dadurch gekennzeichnet, daß** die Schlaufe (30) im Eingriff mit der Schraube (10) und einem Haken (35) am Führungs- und Lagenfixierelement (8) wirksam angeordnet ist.

4. Vorrichtung nach Anspruch 1 bis 3, **dadurch gekennzeichnet, daß** die Schraube (10) endseitig mit einem gewindefreien Zylinderbolzen (33) versehen ist.

5. Vorrichtung nach Anspruch 1 bis 4, **dadurch gekennzeichnet, daß** die vorderseitige Anschlagleiste (4) des Elektrokleinverteilers (1) für den Eingriff und die Lagerung der Schrauben (10) mit einseitig offenen Langlöchern (34) ausgestattet ist.

6. Vorrichtung nach Anspruch 1 bis 5, **dadurch gekennzeichnet, daß** die Schrauben (10) im Bereich ihrer Lagerung in den Langlöchern (34) der Anschlagleiste (4) einseitig jeweils mit einer Sicherungsscheibe (29) axial begrenzt sind.

7. Vorrichtung nach Anspruch 1 bis 6, **dadurch gekennzeichnet, daß** die Hohlwandkralle (5) beim Lösen der Schraube (10) unter der Wirkung der gummielastischen Schlaufe (30) selbsttätig in die Montageausgangslage zurückschwenkbar ist.

## Claims

1. Fastening device for installation boxes able to be installed in cavity wall passages (2), particularly small electrical distributors (1), with cavity wall claws (5) which are arranged in conformity with function in the region of the side walls (11) and which are provided with a guiding and positional fixing element (8) arranged at the rear side at an angle of 90°, that the cavity wall claws (5) are disposed in pivotable engagement with the guiding and positioning fixing element (8) by a shaped cut-out (28.1) in the side wall (11) of the small electrical distributor (1), that the cavity wall claw is mounted to be axially adjustable by the action of a screw (10) operable from the distributor box front side (25), is helically displaceable out of the shaped cut-out (28.1) into a groove-shaped distributor box guide (28) extending parallelly to the axis of the screw (10) and is settable in force-locking manner relative to the rear side (26) of a cavity wall (3), **characterised in that** the guiding and positional fixing element (8) is provided with two mutually parallelly extending guide grooves (40) running perpendicularly relative to the front side (41) of the cavity wall claw (5).

2. Device according to claim 1, **characterised in that** the initial mounting position of the cavity wall claw (5) is securable by means of a rubber-elastic loop (30).

3. Device according to claim 1 and 2, **characterised in that** the loop (30) is arranged in effective engagement with the screw (10) and a hook (35) at the guiding and positional fixing element (8).

4. Device according to claim 1 to 3, **characterised in that** the screw (10) is provided at the end with a thread-free cylinder pin (33).

5. Device according to claim 1 to 4, **characterised in that** the abutment strip (4), which is at the front end, of the small electrical distributor (1) is equipped with elongate holes (34), which are open at one end, for the engagement and mounting of the screws (10).

6. Device according to claim 1 to 5, **characterised in that** the screws (10) are axially bounded in the region of their mounting in the elongate holes (34) of the abutment strip (4) at one end in each case by a securing washer (29).

7. Device according to claim 1 to 6, **characterised in that** the cavity wall claw (5) is automatically pivotable back under the action of the rubber-elastic loop (30) into the initial mounting position on release of the screw (10).

## Revendications

1. Dispositif de fixation pour boîtiers de distribution, en particulier des répartiteurs électriques (1), intégrés dans des ouvertures (2) ménagés dans des murs creux, ledit dispositif comprenant des griffes (5) à murs creux disposées de manière opérationnelle au niveau des parois latérales (11), lesdites griffes (5) étant pourvues d'un élément de guidage et de maintien en position (8) orienté vers l'arrière avec un angle de 90 degrés, les griffes à murs creux (5) avec l'élément de guidage et de maintien en position (8) étant en prise pivotante avec une découpe (28.1) ménagée dans la paroi latérale (11) du répartiteur électrique (1), la griffe à murs creux étant déplaçable axialement par l'actionnement d'une vis (10) accessible à partir du côté avant (25) du boîtier de répartiteur, ladite griffe étant montée de manière mobile axialement à la vis hors de la découpe (28.1) dans un guide (28) de boîtier de répartiteur en forme de rainure qui s'étend parallèlement à l'axe de la vis (10), ladite griffe pouvant venir en prise contre la face arrière (26) d'un mur creux (3), **caractérisé en ce que** l'élément de guidage et de maintien en position (8) est pourvu de deux rainures de guidage (40) s'étendant parallèlement l'une par rapport à l'autre et s'étendant perpendiculairement à la face avant (41) de la griffe à murs creux (5).

2. Dispositif selon la revendication 1, **caractérisé en ce que** 1a position de montage initiale de la griffe à murs creux (5) est assurée au moyen d'un crochet fermé élastique (30).

3. Dispositif selon la revendication 2, **caractérisé en ce que** le crochet fermé (30) est disposé de manière opérante en prise avec la vis (10) et un crochet (35) au niveau de l'élément de guidage et de maintien en position (8).

4. Dispositif selon l'une quelconque des revendications 1 à 3, **caractérisé en ce que** la vis (10) est pourvue à son extrémité d'une broche cylindrique (33) qui est dépourvue de filetage.

5. Dispositif selon l'une quelconque des revendications 1 à 4, **caractérisé en ce que** le plastron d'appui avant (4) du répartiteur électrique (1) est conçu pour mettre en prise et positionner la vis (10) avec des trous allongés borgnes (34).

6. Dispositif selon l'une quelconque des revendications 1 à 5, **caractérisé en ce que** les vis (10) sont limitées axialement au niveau de leur portée dans les trous allongés (34) du plastron d'appui (4) d'un côté respectivement par une rondelle de sécurité (29).

7. Dispositif selon l'une des revendications 1 à 6, **caractérisé en ce que** la griffe à murs creux (5) est rétractable par pivotement en desserrant la vis (10) sous l'action du crochet fermé élastique (30) automatiquement dans la position initiale de montage.
